## Europäisches Patentamt
## European Patent Office
## Office européen des brevets

(19)

(11) **EP 0 782 594 B1**

(12) **EUROPÄISCHE PATENTSCHRIFT**

(45) Veröffentlichungstag und Bekanntmachung des Hinweises auf die Patenterteilung:
**12.08.1998 Patentblatt 1998/33**

(21) Anmeldenummer: **95933381.6**

(22) Anmeldetag: **21.09.1995**

(51) Int Cl.⁶: **C08G 65/20**, C08G 65/10, C08G 65/26, B01J 23/24

(86) Internationale Anmeldenummer:
**PCT/EP95/03651**

(87) Internationale Veröffentlichungsnummer:
**WO 96/09335 (28.03.1996 Gazette 1996/14)**

(54) **VERFAHREN ZUR HERSTELLUNG VON POLYTETRAHYDROFURAN**

METHOD OF PRODUCING POLYTETRAHYDROFURANE

PROCEDE DE FABRICATION DE POLYTETRAHYDROFURANE

(84) Benannte Vertragsstaaten:
**AT BE CH DE ES FR GB IE IT LI LU NL SE**

(30) Priorität: **21.09.1994 DE 4433606**

(43) Veröffentlichungstag der Anmeldung:
**09.07.1997 Patentblatt 1997/28**

(73) Patentinhaber: **BASF AKTIENGESELLSCHAFT**
**67056 Ludwigshafen (DE)**

(72) Erfinder:
  • **BECKER, Rainer**
    **D-67098 Bad Dürkheim (DE)**
  • **SIGWART, Christoph**
    **D-69198 Schriesheim (DE)**

  • **HESSE, Michael**
    **D-67105 Schifferstadt (DE)**
  • **FISCHER, Rolf**
    **D-69121 Heidelberg (DE)**
  • **ELLER, Karsten**
    **D-67059 Ludwigshafen (DE)**
  • **HEILEN, Gerd**
    **D-67435 Neustadt (DE)**
  • **PLITZKO, Klaus-Dieter**
    **D-67117 Limburgerhof (DE)**

(56) Entgegenhaltungen:
EP-A- 0 158 229          EP-A- 0 503 394
WO-A-92/14773           US-A- 3 856 826
US-A- 5 102 849          US-A- 5 210 283

EP 0 782 594 B1

**EP 0 782 594 B1**

**Beschreibung**

Die vorliegende Erfindung betrifft Verfahren zur Herstellung von Polytetrahydrofuran oder Polytetrahydrofuranmonoestern von $C_1$- bis $C_{10}$-Monocarbonsäuren durch die Polymerisation von Tetrahydrofuran an einem heterogenen Katalysator in Gegenwart eines der Telogene Wasser, 1,4-Butandiol, Polytetrahydrofuran eines Molekulargewichts von 200 bis 700 Dalton, einer $C_1$- bis $C_{20}$-Monocarbonsäure oder Gemischen dieser Telogene.

Polytetrahydrofuran (PTHF), auch Polyoxybutylenglykol genannt, dient als Zwischenprodukt zur Herstellung von Polyurethan-, Polyester- und Polyamid-Elastomeren, zu deren Herstellung es als Diolkomponente eingesetzt wird. Der Einbau von PTHF in diese Polymere bewirkt, daß diese weich und flexibel werden, weshalb PTHF auch als Weichsegment-Komponente für diese Polymere bezeichnet wird. Polytetrahydrofuranmonoester von Monocarbonsäuren finden beispielsweise als Weichmacher (US-A 4 482 411), Imprägniermittel (DE-A 29 32 216), Monomere (EP-A 286 454), Emulgatoren und Dispergierhilfsmittel (JP-A 138 452/1987) Anwendung und werden außerdem noch zum Deinken bei der Wiederaufarbeitung von Altpapier (JP-A 303 190/1988) eingesetzt.

Die kationische Polymerisation von Tetrahydrofuran (THF) mit Hilfe von Katalysatoren wurde von Meerwein et al. (Angew. Chem. _72_, 927 (1960)) beschrieben. Als Katalysatoren werden dabei entweder vorgeformte Katalysatoren verwendet, oder die Katalysatoren werden in situ im Reaktionsgemisch erzeugt. Dies geschieht dadurch, daß im Reaktionsmedium mit Hilfe starker Lewis-Säuren, wie Bortrichlorid, Aluminiumchlorid, Zinntetrachlorid, Antimonpentachlorid, Eisen(III)chlorid oder Phosphorpentafluorid oder mittels starker Brönsted-Säuren, wie Perchlorsäure, Tetrafluoroborsäure, Fluorsulfonsäure, Chlorsulfonsäure, Hexachlorozinn(IV)säure, Iodsäure, Hexachloroantimon(V)säure oder Tetrachloroeisen(III)säure und mit Hilfe von als Promotoren bezeichneten reaktiven Verbindungen, wie Alkylenoxiden, z.B. Ethylenoxid, Propylenoxid, Epichlorhydrin oder Butylenoxid, Oxetanen, Orthoestern, Acetalen, α-Halogenethern, Benzylhalogeniden, Triarylmethylhalogeniden, Säurechloriden, β-Lactonen, Carbonsäureanhydriden, Thionylchlorid, Phosphoroxychlorid oder Sulfonsäurehalogeniden, Oxoniumionen erzeugt werden, die die Polymerisation des THF initiieren. Aus der Vielzahl dieser Katalysatorsysteme haben jedoch nur wenige technische Bedeutung erlangt, da sie teilweise hoch korrosiv sind und/oder bei der Herstellung des PTHF zu verfärbten PTHF-Produkten mit nur beschränkter Verwendbarkeit führen. Viele dieser Katalysatorsysteme wirken darüber hinaus nicht im eigentlichen Sinne katalytisch, sondern müssen, bezogen auf das herzustellende Makromolekül, in stöchiometrischen Mengen eingesetzt werden und werden bei der Polymerisation verbraucht. Beispielsweise müssen bei der Herstellung von PTHF mit Fluorsulfonsäure als Katalysator nach US-A 3 358 042 zwei Moleküle Fluorsulfonsäure pro Molekül PTHF als Katalysator eingesetzt werden. Ein besonderer Nachteil der Verwendung halogenhaltiger Katalysatoren ist, daß diese zur Bildung halogenierter Nebenprodukte bei der PTHF-Herstellung führen, die vom reinen PTHF nur sehr schwierig abzutrennen sind und dessen Eigenschaften nachteilig beeinflussen.

Bei der Herstellung von PTHF in Gegenwart der genannten Promotoren werden diese Promotoren als Telogene in das PTHF-Molekül eingebaut, so daß als primäres Produkt der THF-Polymerisation nicht PTHF entsteht, sondern ein PTHF-Derivat, beispielsweise ein PTHF-Diester oder -Sulfonat, aus dem das PTHF in einer weiteren Umsetzung, z.B. durch Verseifung oder Umesterung (vgl. US-A 2 499 725 und DE-A 27 60 272) freigesetzt werden muß. Bei der Verwendung von Alkylenoxiden als Promotoren wirken diese auch als Comonomere und werden in das Polymer eingebaut, mit der Folge, daß THF-Alkylenoxid-Copolymere mit anderen Eigenschaften, insbesondere anderen Anwendungseigenschaften als PTHF, gebildet werden.

Gemäß US-A 5 149 862 wird sulfatdotiertes Zirkoniumdioxid als saurer heterogener, im Reaktionsmedium unlöslicher Polymerisationskatalysator verwendet. Zur Beschleunigung der Polymerisation wird dem Reaktionsmedium ein Gemisch aus Essigsäure und Acetanhydrid zugesetzt, da in Abwesenheit dieser Promotoren die Polymerisation nur sehr schleppend verläuft und während eines Zeitraums von 19 Stunden nur ein Umsatz von 6 % erzielt wird. Bei diesem Verfahren werden PTHF-Diacetate gebildet, die anschließend durch Verseifung oder Umesterung in PTHF umgewandelt werden müssen.

Die US-A 5 344 964 lehrt die Herstellung von PTHF-Diestern durch Umsetzung von THF mit einer Mischung einer Monocarbonsäure und eines Carbonsäureanhydrids. Die Umsetzung erfolgt an sauren Metalloxiden von Metallen der Gruppen III und IV des Periodischen Systems der Elemente.

PTHF-Diester entstehen ebenfalls bei der Polymerisation von THF mit Bleicherdekatalysatoren nach EP-A 3112.

In US-A 4 303 782 werden Zeolithe zur Herstellung von PTHF eingesetzt. Die nach diesem Verfahren erhältlichen THF-Polymeren haben extrem hohe mittlere Molekulargewichte - $M_n$ 250.000 bis 500.000 D - und konnten sich für die obengenannten Anwendungszwecke nicht durchsetzen. Dementsprechend hat auch dieses Verfahren keine industrielle Bedeutung erlangt. Ein weiterer schwerwiegender Nachteil dieses Verfahrens ist die geringe Raum-Zeit-Ausbeute (ca. 4 % PTHF in 24 Stunden), die mit den darin verwendeten Zeolithen erzielt wird.

Nach US-A 4 120 903 kann PTHF aus THF und Wasser mit Hilfe von supersauren Nafion®-Ionenaustauscherharzen hergestellt werden. Diese speziellen Ionenaustauscher sind wegen ihrer schwierigen Herstellbarkeit sehr teuer und verteuern dadurch das mit ihrer Hilfe hergestellte PTHF. Ein weiterer Nachteil dieser Ionenaustauscher-Harze ist ihre unzureichende Langzeitstabilität und ihre mangelnde Reaktivierbarkeit, was sich ebenfalls auf die Wirtschaftlichkeit dieses Verfahrens negativ auswirkt.

JP-A 83 028/1983 lehrt die Polymerisation von THF in Gegenwart eines Carbonsäurehalogenids oder Carbonsäureanhydrids, wobei eine Heteropolysäure als Katalysator benutzt wird. Dabei entstehen ebenfalls PTHF-Diester, welche zu PTHF hydrolysiert werden müssen.

JP-A 91171/94 betrifft einen Katalysator aus einem oxidischen Trägermaterial der ein Salz einer Heteropolysäure enthält und durch Aufbringung des Heteropolysäuresalzes auf das Trägermaterial und Trocknung bei 300°C hergestellt worden ist. Bei dieser Trocknungstemperatur bleibt die chemische Struktur der Heteropolysäure erhalten. Die Anwendung dieser Katalysatoren zur Polymerisation von Tetrahydrofuran wird vorgeschlagen. Diese Katalysatoren haben allerdings den Nachteil einer geringen Standzeit, da die auf dem Träger adsorbierte Heteropolysäure bei der Ausübung des Verfahrens ausblutet.

In US-A 4 568 775 und US-A 4 658 065 wird ein Verfahren zur Herstellung von PTHF beschrieben, bei dem Heteropolysäuren als Katalysatoren angewendet werden. Die Heteropolysäuren sind zu einem gewissen Grad in der Polymerisationsmischung und im Polymerisat löslich und müssen, da sie Verfärbungen des PTHF-Produktes verursachen, durch aufwendige technische Maßnahmen - Zusatz eines Kohlenwasserstoffs zur Ausfällung der Heteropolysäure, Abtrennung der ausgefällten Heteropolysäure und Abtrennung des zugesetzten Kohlenwasserstoffs - aus diesem entfernt werden. EP-A 503 394 betrifft ein Verfahren zur Herstellung von Polytetrahydrofuranmonoestern von Monocarbonsäuren mittels Heteropolysäurekatalysatoren.

Alle der vorgenannten Verfahren zur Herstellung von PTHF oder PTHF-Diestern haben den Nachteil geringer oder mäßiger Raum-Zeit-Ausbeuten. Der vorliegenden Erfindung lag daher die Aufgabe zugrunde, ein Verfahren zu finden, das es ermöglicht PTHF als auch PTHF-Monoester in hohen Raum-Zeit-Ausbeuten, d.h. mit hoher Selektivität bei hohem THF-Umsatz, zu gewinnen.

Dementsprechend wurde ein Verfahren zur Herstellung von Polytetrahydrofuran oder Polytetrahydrofuranmonoestern von $C_1$- bis $C_{10}$-Monocarbonsäuren durch die Polymerisation von Tetrahydrofuran an einem heterogenen Katalysator in Gegenwart eines der Telogene Wasser, 1.4-Butandiol oder Polytetrahydrofuran eines Molekulargewichts von 200 bis 700 Dalton oder einer $C_1$- bis $C_{10}$-Monocarbonsäure oder Gemischen dieser Telogene, gefunden, das dadurch gekennzeichnet ist, daß man als Katalysator einen Trägerkatalysator verwendet, der eine katalytisch aktive Menge einer sauerstoffhaltigen Wolfram- oder Molybdänverbindung oder Gemische dieser Verbindungen auf einem oxidischen Trägermaterial enthält und der nach Aufbringung der Vorläuferverbindungen der sauerstoffhaltigen Molybdänund/oder Wolframverbindungen auf den Trägermaterialvorläufer bei Temperaturen von 500 bis 1000°C calciniert worden ist.

Als Polymerisationskatalysatoren werden in erfindungsgemäßen Verfahren Trägerkatalysatoren aus einem oxidischen Trägermaterial verwendet, die sauerstoffhaltige Molybdän- oder Wolframverbindungen oder Gemische solcher Verbindungen als katalytisch aktive Verbindungen enthalten und die weiterhin gewünschtenfalls zusätzlich mit Sulfatoder Phosphat-Gruppen dotiert sein können. Zur Überführung in ihre katalytisch aktive Form werden die Trägerkatalysatoren nach Aufbringung der Vorläuferverbindungen der katalytisch aktiven, sauerstoffhaltigen Molybdän- und/oder Wolframverbindungen auf das Trägermaterial einer Calcinierung bei 500°C bis 1000°C unterworfen, wobei das Trägermaterial und die Vorläuferverbindung eine Umwandlung in die erfindungsgemäß einsetzbaren Katalysatoren erfahren.

Als oxidische Träger sind z.B. Zirkoniumdioxid, Titandioxid, Hafniumoxid, Yttriumoxid, Eisen(III)oxid, Aluminiumoxid, Zinn(IV)oxid, Siliziumdioxid, Zinkoxid oder Gemische dieser Oxide geeignet. Besonders bevorzugt ist Zirkoniumdioxid und/oder Titandioxid.

Die erfindungsgemäß anwendbaren Katalysatoren enthalten im allgemeinen 0,1 bis 50 Gew.-%, vorzugsweise 1 bis 30 Gew.-% und besonders bevorzugt 5 bis 20 Gew.-% der katalytisch aktiven, sauerstoffhaltigen Verbindungen des Molybdäns oder Wolframs oder der Gemische der katalytisch aktiven, sauerstoffhaltigen Verbindungen dieser Metalle, jeweils bezogen auf das Gesamtgewicht des Katalysators und da die chemische Struktur der katalytisch aktiven, sauerstoffhaltigen Verbindungen des Molybdäns und/oder Wolframs bislang nicht genau bekannt ist, sondern nur z.B. aus den Daten der IR-Spektren der erfindungsgemäß anwendbaren Katalysatoren postuliert werden kann, jeweils berechnet als $MoO_3$ bzw. $WO_3$.

Grundsätzlich können die erfindungsgemäßen Katalysatoren zusätzlich zu den katalytisch aktiven, sauerstoffhaltigen Molybdän-und/oder Wolframverbindungen noch mit 0,05 bis 10 Gew.-%, vorzugsweise mit 0,1 bis 5 Gew.-%, insbesondere mit 0,25 bis 3 Gew.-% sauerstoffhaltige Schwefel- oder Phosphor- oder Schwefel- und Phosphor-enthaltenden Verbindungen jeweils berechnet auf das Gesamtgewicht des Katalysators, dotiert sein. Da ebenfalls nicht bekannt ist, in welcher chemischen Form diese Schwefel-bzw. Phosphor-haltigen Verbindungen im fertigen Katalysator vorliegen, werden die Gehalte dieser Gruppen im Katalysator pauschal als $SO_4$ bzw. $PO_4$ berechnet.

Zur Herstellung der erfindungsgemäßen Katalysatoren wird in der Regel von den Hydroxiden der betreffenden Trägerkomponenten ausgegangen. Soweit diese Hydroxide kommerziell erhältlich sind, können im Handel erhältliche Hydroxide als Ausgangsmaterialien zur Herstellung der oxidischen Träger eingesetzt werden, vorzugsweise werden jedoch frisch gefällte Hydroxide zur Herstellung der oxidischen Träger verwendet, die nach ihrer Fällung im allgemeinen bei 20 bis 350°C, vorzugsweise bei 50 bis 150°C, insbesondere 100 bis 120°C, bei Atmosphärendruck oder vermindertem Druck getrocknet werden.

Als Ausgangsverbindungen zur Herstellung dieser Hydroxide dienen im allgemeinen die wasserlöslichen oder hydrolysierbaren Salze der das Trägermaterial konstituierenden Elemente, beispielsweise deren Halogenide, vorzugsweise deren Nitrate oder Carboxylate, insbesondere deren Acetate. Geeicnete Ausgangsverbindungen zur Fällung dieser Hydroxide sind z.B. Zirconylchlorid, Zirconylnitrat, Titanylchlorid, Titanylnitrat, Yttriumnitrat, Yttriumacetat, Aluminiumnitrat, Aluminiumacetat, Eisen(III)nitrat, Zinn(IV)halogenide, insbesondere Zinn(IV)chlorid, Zinknitrat oder Zinkacetat. Aus den Lösungen dieser Salze werden die entsprechenden Hydroxide vorzugsweise mittels wäßriger Ammoniaklösung ausgefällt. Alternativ können die Hydroxide durch Zugabe verdünnter oder schwacher Säuren, wie Essigsäure, zu wasserlöslichen Hydroxokomplexen der betreffenden Metalle bis zur Ausfällung des betreffenden Hydroxids, erhalten werden. Ebenso ist es möglich, die Hydroxide durch die Hydrolyse von organometallischen Verbindungen, beispielsweise den Alkoholaten der betreffenden Metalle, wie Zirkoniumtetraethanolat, Zirkoniumtetraisopropylat, Titantetramethanolat, Titantetraisopropylat usw., zu erhalten.

Im allgemeinen entsteht bei der Fällung dieser Hydroxide ein gelartiger Niederschlag, der nach Trocknung ein röntgenamorphes Pulver ergibt. Es besteht die Möglichkeit, daß diese röntgenamorphen Niederschläge außer aus den Hydroxiden der betreffenden Metalle zusätzlich aus einer Vielzahl anderer Hydroxylgruppen-haltiger Verbindungen zusammengesetzt sind, beispielsweise Oxidhydraten, polymeren , wasserunlöslichen Hydroxo-Komplexen usw. Da die genaue chemische Zusammensetzung dieser Niederschläge aber nicht ermittelt werden kann, wird für die Zwecke dieser Anmeldung der Einfachheit halber angenommen, daß es sich dabei um die Hydroxide der genannten Metalle handelt. Die Bezeichnung "Hydroxide" im Sinne dieser Anmeldung stellt somit eine Sammelbezeichnung für die bei den vorgenannten Fällungsmethoden erhaltenen Hydroxygruppen-haltigen Niederschläge dar.

Bei der Verwendung von Siliziumdioxid als oxidischem Trägermaterial wird zur Herstellung der erfindungsgemäß anwendbaren Katalysatoren vorzugsweise von frisch gefällter Kieselsäure ausgegangen, die beispielsweise durch Ansäuern einer Wasserglaslösung erhalten werden kann, und die zweckmäßigerweise vor Weiterverarbeitung, wie zuvor für die Hydroxidniederschläge beschrieben, getrocknet wird.

Auf die so hergestellten Hydroxide der Trägerkomponenten bzw. die Kieselsäure, die in dieser Anmeldung auch als Trägermaterialvorläufer bezeichnet werden, werden die Vorläuferverbindungen der katalytisch aktiven, sauerstoffhaltigen Molybdän- und/oder Wolframverbindungen vorzugsweise durch die Imprägnierung mit einer wäßrigen Lösung dieser Vorläuferverbindungen aufgebracht. Als wasserlösliche Vorläuferverbindungen der katalytisch aktiven, sauerstoffhaltigen Wolfram- bzw. Molybdänverbindungen können beispielsweise die wasserlöslichen Salze der Wolframsäure ($H_2WO_4$), wie sie beispielsweise beim Lösen von Wolframtrioxid in wäßrigem Ammoniak entstehen, also die Monowolframate, und die daraus beim Ansäuern entstehenden Isopolywolframate, z.B. die Parawolframate oder Metawolframate, die wasserlöslichen Salze der Molybdänsäure ($H_2MoO_4$), wie sie beispielsweise beim Lösen von Molybdäntrioxid in wäßrigem Ammoniak entstehen und die daraus beim Ansäuern sich bildenden Isopolymolybdate, insbesondere die Metamolybdate und Paramolybdate verwendet werden. Vorzugsweise werden die Ammoniumsalze dieser Wolfram- und Molybdänsäuren als Vorläuferverbindungen auf die Hydroxide der Trägerkomponenten bzw. die Kieselsäure aufgetränkt. Zur Nomenklatur, Zusammensetzung und Herstellung der Molybdate, Isopolymolybdate, Wolframate bzw. Isopolywolframate sei auf Römpps Chemie-Lexikon, 8. Auflage, Band 4, S. 2659-2660, Francksche Verlagsbuchhandlung, Stuttgart, 1985; Römpps Chemie-Lexikon, 8. Auflage, Band 6, S. 4641-4644, Stuttgart 1988 und Comprehensive Inorganic Chemistry, 1. Ed., Vol. 3, S. 738-741 und 766-768, Perganon Press, New York 1973 verwiesen. Anstelle der zuvor genannten Molybdän- bzw. Wolfram-Vorläufer-Verbindungen der katalytisch aktiven Molybdän- bzw. Wolframverbindungen können auch Heteropolysäuren des Molybdäns bzw. Wolframs, wie 12-Wolframatokieselsäure ($H_4[(Si\{W_{12}O_{40}\}]\cdot26H_2O$) oder 12-Molybdatokieselsäure, oder deren wasserlöslichen Salze, vorzugsweise deren Ammoniumsalze, zur Aufbringung des Molybdäns bzw. Wolframs auf den hydroxidischen, d.h. Hydroxylgruppen-enthaltenden, Trägermaterialvorläufer, verwendet werden. Die so getränkten Hydroxide der jeweils verwendeten Trägerkomponenten bzw. die getränkte Kieselsäure werden im allgemeinen bei Temperaturen von 80 bis 350°C, vorzugsweise von 90 bis 150°C bei Atmosphärendruck oder bei verminderten Druck getrocknet.

Es besteht auch die Möglichkeit, die genannten Vorläuferverbindungen der katalytisch aktiven, sauerstoffhaltigen Molybdän- oder Wolframverbindungen durcn inniges Vermischen mit einem oder mehreren der genannten Hydroxide in den späteren Katalysator einzubringen. Die Calcinierung der so beaufschlagten Trägermaterialvorläufer zu den erfindungsgemäß anwendbaren Katalysatoren erfolgt auf die gleiche Weise wie bei den mit diesen Vorläuferverbindungen getränkten Trägermaterialvorläufern. Bevorzugt wird jedoch die Tränkmethode zur Herstellung der erfindungsgemäß anwendbaren Katalysatoren angewandt.

Die so getränkten und getrockneten Katalysatorvorläufer werden durch eine Calcinierung an der Luft bei Temperaturen von 500 bis 1000°C, vorzugsweise von 550 bis 900°C und besonders bevorzugt bei Temperaturen von 600 bis 800°C in die fertigen Katalysatoren umgewandelt. Im Zuge der Calcinierung werden die Hydroxide der Trägerkomponenten bzw. die Kieselsäure in das oxidische Trägermaterial und die darauf aufgetränkten Vorläuferverbindungen der katalytisch aktiven, sauerstoffhaltigen Molybdän- bzw. Wolframverbindungen in diese katalytisch aktiven Komponenten umgewandelt. Die Calcinierung bei diesen hohen Temperaturen ist kritisch für die Erzielung eines hohen Umsatzes und damit einer hohen Raum-Zeit-Ausbeute bei der THF-Polymerisation. Bei niedrigeren Calcinierungstemperaturen bewirken die Katalysatoren zwar ebenfalls die THF-Polymerisation, allerdings nur mit unwirtschaftlich niedrigen Umsätzen. Aufgrund von IR-Untersuchungen an derartig hergestellten Katalysatoren vermuten Yinyan et al, Rare Metals 11, 185 (1992), daß im Falle wolframdotierter Zirkoniumoxid-Trägerkatalysatoren die auf das Zirkoniumhydroxid aufgetränkte Vorläuferverbindung der katalytisch aktiven, sauerstoffhaltigen Wolframverbindung bei den angewandten hohen Calcinierungstemperaturen eine chemische Verbindung mit den Hydroxygruppen des Trägermaterialvorläufers eingeht, wobei sich die katalytisch aktive, sauerstoffhaltige Wolframverbindung bildet, die sich hinsichtlich ihrer chemischen Struktur und chemischen Aktivität, insbesondere ihren katalytischen Eigenschaften deutlich von lediglich an das Trägermaterial Zirkondioxid adsorbierten sauerstoffhaltigen Wolframverbindungen unterscheidet. Diese Sachverhalte werden auch für die erfindungsgemäß anwendbaren Molybdän-haltigen Trägerkatalysatoren angenommen.

Wie bereits erwähnt, können im erfindungsgemäßen Verfahren vorteilhaft auch Trägerkatalysatoren eingesetzt werden, die außer Molybdän und/oder Wolfram zusätzlich mit Schwefel- oder Phosphor-oder Schwefel- und Phosphor-enthaltenden Verbindungen dotiert sind. Die Herstellung dieser Katalysatoren erfolgt auf analoge Art und Weise, wie sie zuvor für die nur Molybdän- und/oder Wolframverbindungen enthaltenden Katalysatoren beschrieben wurde, wobei zusätzlich Schwefel- und/oder Phosphor-enthaltende Verbindungen auf die auf analoge Weise hergestellten Hydroxide der Trägerkomponente bzw. die Kieselsäure aufgetränkt werden. Die Aufbringung der Schwefel- und/oder Phosphor-Verbindungen auf das Trägermaterial kann gleichzeitig mit der Aufbringung der Molybdän- und/oder Wolframkomponente erfolgen oder im Anschluß daran. Zweckmäßigerweise werden die Schwefel- und/oder Phosphor-Komponenten durch Tränkung der Hydroxide der Trägerkomponenten bzw. der Kieselsäure mit einer wäßrigen Lösung einer Sulfat- oder Phosphat-Gruppen enthaltenden Verbindung, beispielsweise Schwefelsäure oder Phosphorsäure, hergestellt. Vorteilhaft können auch Lösungen wasserlöslicher Sulfate oder Phosphate zur Tränkung verwendet werden, wobei Ammoniumsulfate bzw. Ammoniumphosphate besonders bevorzugt sind. Eine weitere Methode die Phosphor-haltigen Vorläuferverbindungen gemeinsam mit den Molybdän- oder Wolfram-enthaltenden Vorläuferbindungen auf den hydroxidischen Trägermaterialvorläufer aufzubringen, besteht darin, die hydroxidischen Trägermaterialvorläufer mit Phosphor-haltigen Heteropolysäuren nach den oben beschriebenen Verfahren zu beaufschlagen. Beispielhaft seien als solche Heteropolysäuren 12-Wolframatophosphorsäure ($H_3[P\{W_{12}O_4O\}\cdot xH_2O$) und 12-Molybdatophosphorsäure ($H_7[P\{Mo_2O\}O_6]\cdot 28H_2O$) genannt. Es können zu diesem Zweck auch Heteropolysäuren des Molybdäns oder Wolframs mit organischen Säuren des Phosphors, beispielsweise Phosphonsäuren, eingesetzt werden. Die genannten Heteropolysäuren können auch in Form ihrer Salze, vorzugsweise als Ammoniumsalze, zu diesem Zweck verwendet werden.

Bei der Calcinierung unter den obengenannten Bedingungen werden die Heteropolysäuren zu den katalytisch aktiven, sauerstoffhaltigen Molybdän- oder Wolframverbindungen zersetzt.

Die erfindungsgemäß anwendbaren Katalysatoren sind zum Teil bekannt und ihre Herstellung in JP-A 288 339/1989, JP-A 293 375/1993, J. Chem. Soc. Chem. Commun, 1259 (1988) und Rare Metals 11, 185 (1992) beschrieben. Die Katalysatoren wurden bislang nur in petrochemischen Verfahren, beispielsweise als Katalysatoren für Alkylierungen, Isomerisierungen und das Cracken von Kohlenwasserstoffen verwendet, also Verfahren, die mit dem erfindungsgemäßen Verfahren nicht verwandt sind.

Die erfindungsgemäß anwendbaren Katalysatoren können in Form von Pulver, beispielsweise bei der Durchführung des Verfahrens in Suspensionsfahrweise, oder zweckmäßigerweise als Formkörper, z.B. in Form von Zylindern, Kugeln, Ringen, Spiralen oder Splitt, insbesondere bei einer Festbettanordnung des Katalysators, welche bei Verwendung von z.B. Schlaufenreaktoren oder beim kontinuierlichen Betrieb des Verfahrens bevorzugt ist, im erfindungsgemäßen Verfahren eingesetzt werden.

Als Telogen zur Herstellung der PTHF-Monoester von Monocarbonsäuren dienen im allgemeinen $C_1$- bis $C_{10}$-Monocarbonsäuren, vorzugsweise $C_1$- bis $C_8$-Monocarbonsäuren und besonders bevorzugt Ameisensäure, Essigsäure, Propionsäure, 2-Ethylhexansäure, Acrylsäure und Methacrylsäure.

Besonders überraschend und besonders vorteilhaft ist, daß sich bei Verwendung der Telogene Wasser und/oder 1,4-Butandiol PTHF nach dem erfindungsgemäßen Verfahren in hohen Raum-Zeit-Ausbeuten in einem Schritt gewinnen läßt. Gewünschtenfalls kann auch niedermolekulares, offenkettiges PTHF eines Molekulargewichts von 200 bis 700 Dalton als Telogen in die Polymerisationsreaktion zurückgeführt werden, wo es in höhermolekulares PTHF umgewandelt wird. Da 1,4-Butandiol und niedermolekulares PTHF zwei Hydroxygruppen haben, werden sie nicht nur als Telogen an den Kettenenden der PTHF-Kette, sondern auch in die PTHF-Kette als Monomer eingebaut.

Das Telogen wird zweckmäßigerweise gelöst im THF der Polymerisation zugeführt. Da das Telogen den Abbruch der Polymerisation bewirkt, läßt sich über die eingesetzte Telogenmenge das mittlere Molekulargewicht des PTHF oder PTHF-Diesters steuern. Je mehr Telogen im Reaktionsgemisch enthalten ist, desto niedriger wird das mittlere Molekulargewicht des PTHF oder des betreffenden PTHF-Derivates. Je nach Telogengehalt der Polymerisationsmischung können PTHF bzw. die betreffenden PTHF-Derivate mit mittleren Molekulargewichten von 250 bis 10 000 gezielt hergestellt werden. Vorzugsweise werden mit dem erfindungsgemäßen Verfahren PTHF bzw. die betreffenden PTHF-Derivate mit mittleren Molekulargewichten von 500 bis 10 000 Dalton, besonders bevorzugt von 650 bis 3 000 Dalton hergestellt. Hierzu wird das Telogen, bezogen auf die eingesetzte THF-Menge in Mengen von 0,04 bis 17 mol-%, vorzugsweise von 0,2 bis 8 mol-% und besonders bevorzugt von 0,4 bis 4 mol-% zugesetzt.

Die Polymerisation wird im allgemeinen bei Temperaturen von 0 bis 80 °C, vorzugsweise von 25 °C bis zur Siedetemperatur des THF, durchgeführt. Der angewandte Druck ist in der Regel für das Ergebnis der Polymerisation nicht kritisch, weshalb im allgemeinen bei Atmosphärendruck oder unter dem Eigendruck des Polymerisationssystems gearbeitet wird.

Zur Vermeidung der Bildung von Etherperoxiden wird die Polymerisation vorteilhaft unter einer Inertgasatmosphäre vollzogen. Als Inertgase können z.B. Stickstoff, Wasserstoff, Kohlendioxid oder die Edelgase dienen, bevorzugt wird Stickstoff verwendet.

Das erfindungsgemäße Verfahren kann diskontinuierlich oder kontinuierlich betrieben werden, wobei aus wirtschaftlichen Gründen in der Regel die kontinuierliche Betriebsweise bevorzugt wird.

Bei der diskontinuierlichen Betriebsweise werden die Reaktanten THF, das betreffende Telogen und der Katalysator im allgemeinen in einem Rührkessel oder Schlaufenreaktor bei den angegebenen Temperaturen solange umgesetzt, bis der gewünschte Umsatz des THF erreicht ist. Die Reaktionszeit kann in Abhängigkeit von der zugesetzten Katalysatormenge 0,5 bis 40, vorzugsweise 1 bis 30 Stunden betragen. Die Katalysatoren werden zur Polymerisation im allgemeinen in einer Menge von 1 bis 90 Gew.-%, vorzugsweise 4 bis 70 Gew.-% und besonders bevorzugt von 8 bis 60 Gew.-%, bezogen auf das Gewicht des eingesetzten THF, zugesetzt.

Zur Aufarbeitung wird der Reaktionsaustrag im Falle der diskontinuierlichen Betriebsweise vom darin suspendierten Katalysator zweckmäßigerweise durch Filtration, Dekantieren oder Zentrifugieren abgetrennt.

Der vom Katalysator befreite Polymerisationsaustrag wird im allgemeinen destillativ aufgearbeitet, wobei in einer ersten Stufe zweckmäßigerweise nicht umgesetztes THF abdestilliert wird. In einer zweiten Reinigungsstufe kann dann gewünschtenfalls niedermolekulares PTHF vom Polymerisat durch Destillation bei vermindertem Druck abgetrennt und in die Umsetzung zurückgeführt werden. Alternativ hierzu können flüchtige THF-Oligomere, beispielsweise nach dem Verfahren von DE-A 30 42 960, depolymerisiert und auf diese Weise wieder in die Umsetzung zurückgeführt werden.

Beispiele

Herstellung der Katalysatoren:

Katalysator A wurde hergestellt durch Zugabe von 2 600 g Zirkoniumhydroxid zu einer Lösung von 640 g Wolframsäure ($H_2WO_4$) in 3470 g 25%iger Ammoniaklösung. Diese Mischung wurde 30 Minuten geknetet und danach 2 h bei 120 °C getrocknet. Das nach einer Siebung entstandene Pulver wurde tablettiert, die entstandenen Tabletten (3 x 3 mm) anschließend bei 450 °C 2 h calciniert. Der Katalysator hatte einen Wolframgehalt, berechnet als Wolframtrioxid, von 20 Gew.-% bezogen auf das Gesamtgewicht des Katalysators.

Katalysatoren B und C:

Die Katalysatoren B und C wurden analog zu Katalysator A hergestellt, jedoch bei 600 °C (Kat. B) bzw. 700 °C (Kat. C) calciniert.

Katalysator D

Katalysator D wurde hergestellt durch Zugabe von 1 600 g Zirkoniumhydroxid zu einer Lösung von 425 g Wolframsäure und 200 g Ammoniumsulfat in 3 470 g 25 %iger Ammoniaklösung. Diese Mischung wurde 30 Minuten geknetet und danach 2 h bei 120 °C getrocknet. Das nach einer Siebung entstandene Pulver wurde tablettiert, die entstandenen Tabletten anschließend bei 600 °C 2 h calciniert. Der Katalysator hatte einen Wolframgehalt, berechnet als Wolframtrioxid, von 18 Gew.-% und einen Schwefelgehalt, berechnet als $SO_4$, von 7 Gew.-%, bezogen auf das Gesamtgewicht des Katalysators.

Katalysator E

Katalysator E wurde hergestellt durch Zugabe von 2 600 g Zirkoniumhydroxid zu 2 260 g einer 26.5 Gew.-%igen $MoO_3$-Lösung in 12%igem wäßrigem Ammoniak. Diese Mischung wurde 30 Minuten geknetet und danach 16 h bei 120 °C getrocknet. Die getrocknete Masse wurde mit 40 g 75%iger Phosphorsäure und 1,4 1 Wasser 30 Minuten geknetet. Danach wurde 2 h bei 120 °C getrocknet. Das nach einer Siebung entstandene Pulver wurde tablettiert, die entstandenen Tabletten anschließend bei 600 °C 2 h calciniert. Der Katalysator hatte einen Molybdängehalt, berechnet als Molybdäntrioxid, von 20 Gew.-% und einen Phosphorgehalt, berechnet als $PO_4$, von 1 Gew.-%, bezogen auf das Gesamtgewicht des Katalysators.

Katalysator F

Der Katalysator F wurde analog zu Katalysator A hergestellt, jedoch bei 675°C calciniert.

Katalysator G

Katalysator G wurde hergestellt durch Zugabe von 75 g $TiO_2$ (P25, Fa. Degussa) zu einer Lösung aus 20 g Wolframsäure ($H_2WO_4$) in 100 g 32 %iger wäßriger $NH_3$-Lösung. Diese Mischung wurde 2 h geknetet und danach 12 h bei 120°C getrocknet. Das nach Zermahlen erhaltene Pulver wurde 2 h bei 620°C kalziniert. Der pulverförmige Katalysator hatte einen Wolframgehalt, berechnet als $WO_3$, von 20 Gew.-%, bezogen auf das Gesamtgewicht des Katalysators.

Katalysator H

16,58 kg $TiOCl_2$ gelöst in 43,5 1 dest. Wasser wurden mit 45 kg einer 10 gew.-%igen wäßrigen $NH_3$-Lösung vereinigt, indem beide Lösungen bei 50°C unter Rühren bei einem konstanten pH von 6,5 innerhalb von 1 h zu 30 1 dest. Wasser zugegeben werden. Es wurde noch eine Stunde nachgerührt. Der gefällte Niederschlag wurde anschließend abfiltriert, gewaschen und bei 120°C 24 h lang getrocknet. 2,4 kg dieses gefällten $TiO_2$ wurden zu einer Lösung aus 638 g Wolframsäure in 3,65 kg 25 %iger wäßriger NH3-Lösung gegeben. Die Mischung wurde geknetet und danach zu 1,5 mm Strängen verformt. Die Stränge wurden erst 2 h bei 450°C, dann 2 h bei 610°C kalziniert. Der Katalysator hatte einen Wolframgehalt, berechnet als $WO_3$ von 18,6 Gew.-%, bezogen auf das Gesamtgewicht des Katalysators.

Diskontinuierliche THF-Polymerisationen:

In einem 100 ml Glaskolben mit Rückflußkühler wurden unter einer Stickstoff-Atmosphäre 10 g Katalysator, der vor seiner Verwendung zur Entfernung von adsorbiertem Wasser 18 Stunden lang bei 180 °C/0,3 mbar getrocknet worden war, in 20 g telogenhaltigem THF suspendiert und 24 Stunden lang bei 50 °C belassen. Nach dieser Zeit wurde das Reaktionsgemisch mit weiteren 20 g THF verdünnt. Der Katalysator wurde abfiltriert und dreimal mit je 20 g THF gewaschen. Die Filtrate wurden vereinigt, bei 70 °C/ 20 mbar am Rotationsverdampfer eingeengt und gewogen. Zur Bestimmung des mittleren Molekulargewichts $M_n$ wurde ein Teil des erhaltenen PTHF einer Kugelrohrdestillation (150°C/0,1 mbar) unterworfen.

Das mittlere Molekulargewicht ($M_n$) des so erhaltenen PTHF wurde durch Gelpermeationschromatographie (GPC) ermittelt. $M_n$ ist definiert durch die Gleichung

$$M_n = \frac{\Sigma c_i}{\dfrac{\Sigma c_i}{M_i}}$$

in der $c_i$ für die Konzentration der einzelnen Polymerspecies i im erhaltenen Polymergemisch steht und in der $M_i$ das Molekulargewicht der einzelnen Polymerspecies i bedeutet.

In Tabelle 1 sind diskontinuierlich mit unterschiedlichen Katalysatoren und Telogenen erhaltene PTHF-Ausbeuten und mittlere Molekulargewichte $M_n$ zusammengestellt.

In Tabelle 2 sind die Ergebnisse der diskontinuierlichen Polymerisation von THF zu PTHF an mit bei unterschiedlichen Temperaturen calcinierten Katalysatoren unter ansonsten gleichen Reaktionsbedingungen aufgelistet.

Tabelle 1: Diskontinuierliche Polymerisation von THF mit unterschiedlichen Katalysatoren und Telogenen

| Beispiel Nr. | Katalysator | Telogen | Telogen–Menge[1] [Gew.-ppm] | THF–Umsatz[2] [%] | mittl. Molekulargewicht [$M_n$] |
|---|---|---|---|---|---|
| 1 | $WO_3/ZrO_2$ C | Butandiol | 2000 | 56,8 | 7200 |
| 2 | $MoO_3/ZrO_2/PO_4$ E | Butandiol | 2000 | 60,9 | 6900 |
| 3 | $WO_3/ZrO_2$ C | Wasser | 400 | 48,0 | 9700 |
| 4 | $WO_3/ZrO_2$ C | Wasser | 1000 | 12 | 2600 |
| 5 | $WO_3/ZrO_2$ D | Ameisensäure[3] | 1020 | 35,5 | 6600 |

1) bezogen auf THF
2) zu PTHF bzw. PTHF-Monoformiat
   Selektivität der Umsetzung jeweils annähernd 100 %
3) Herstellung von PTHF-Monoformiat

Tab. 2: Diskontinuierliche Polymerisation von THF mit bei unterschiedlichen Temperaturen calcinierten $WO_3/ZrO_2$-Katalysatoren

| Beispiel Nr. | Katalysator | Calcinierungstemperatur [°C] | Telogen | Telogen–Menge[1] [ppm] | Umsatz von THF[2] [%] |
|---|---|---|---|---|---|
| 6 | A | 450 | | | 0,3 |
| 7 | B | 600 | 1,4-Butandiol | 2000 | 31,2 |
| 8 | C | 700 | | | 56,8 |

[1] bezogen auf THF

[2] Selektivität zu PTHF annähernd 100 %

Beispiel 9

Ein 250 ml-Festbettreaktor wurde unter Argon mit 220 ml (372 g) des 20 Stunden bei 180 °C/0,3 mbar getrockneten $MoO_3/ZrO_2/PO_4^{3-}$-Katalysators E befüllt. Beim Einfüllen wurde der Katalysator mit THF (< 0,01 Gew.-% Wasser) überdeckt. Zum Umpumpen der Reaktionsmischung war eine Umlaufpumpe vorhanden. Nach vollständigem Befüllen von Reaktor, Pumpe und Rohrleitungen mit THF wurde das Reaktionsgemisch 24 Stunden lang ohne THF-Zufuhr bei 50 °C Reaktortemperatur über den Katalysator gepumpt. Dann wurden 120 Stunden lang kontinuierlich 8,1 g THF/Stunde, das 0,2 Gew.-% 1.4-Butandiol enthielt, in den Kreislauf dosiert. Das Umlauf-/Zulaufverhältnis lag bei etwa 60. Die mittlere THF-Ausbeute über die Reaktionszeit von 120 Stunden betrug 48,9 %. Das mittlere Molgewicht $M_n$ des erhaltenen PTHF betrug laut GPC 2400 Dalton.

Beispiel 10

Die in Beispiel 9 beschriebene kontinuierliche THF-Polymerisation am Katalysator E wurde bei gleichem Zulauf von THF, das 0,4 Gew.-% 1,4-Butandiol enthielt, jedoch ohne Produktrückführung (Umlaufpumpe abgestellt), bei sonst gleichen Reaktionsbedingungen fortgesetzt. Nachdem sich die PTHF-Ausbeute stabilisiert hatte, wurde 72 h lang der anfallende Reaktionsaustrag gesammelt. Nach Eindampfen der Reaktionslösung, wie für die diskontinuierlichen Versuche beschrieben, wurde PTHF mit einem mittleren Molekulargewicht von 900 Dalton (nach GPC) bei einem THF-Umsatz von 6,8 % erhalten.

Diskontinuierliche Polymerisation von THF

Die diskontinuierlichen Polymerisationsversuche mit den Katalysatoren F bis H wurden wie in Beispiel 1 oder 2 beschrieben durchgeführt. Tabelle 3 zeigt die erhaltenen Versuchsergebnisse.

Tabelle 3

| Beispiel Nr. | Katalysator | Telogen | Telogen-Menge [Gew.-ppmj | THF-Umsatz [%] | mittl. Molekulargewicht [$M_n$] |
|---|---|---|---|---|---|
| 11 | $WO_3/ZrO_2$ F | Butandiol | 2000 | 36,2 | 5500 |
| 12 | $WO_3/TiO_2$ G | Butandiol | 2000 | 47,9 | 7900 |
| 13 | $WO_3/TiO_2$ H | Butandiol | 2000 | 37,2 | 5300 |

Kontinuierliche THF-Polymerisation in Gegenwart von Butan-1,4-diol

Beispiel 14

Ein 250 ml-Festbettreaktor wurde unter Argon mit 332 g (250 ml) des 72 h bei 180°C/0,3 mbar getrockneten $WO_3$-$ZrO_2$-Katalysators F befüllt. Die Polymerisationsapparatur wurde mit Butan-1,4-diolhaltigem THF (0,5 Gew.-% Butan-1,4-diol) gefüllt. Zunächst wurde das Reaktionsgemisch 24 h lang bei 50°C Reaktortemperatur über den Katalysator gepumpt. Anschließend wurde Butan-1,4-diol-haltiges THF (0,5 Gew.-% Butan-1,4-diol) bei einer Katalysatorbelastung von 0,166 kg THF/1 Katalysator*h kontinuierlich zugefahren. Der während einer Laufzeit von 72 h anfallende Polymerisationsaustrag (3,00 kg) wurde durch Abdestillieren des nichtumgesetzten THF unter vermindertem Druck und anschließende Kurzwegdestillation bei 150°C/0,3 mbar aufgearbeitet. Es wurden 290 g PTHF erhalten, das laut $^1$H-NMR-Spektrum ein mittleres Molekulargewicht $M_n$ von 2100 Dalton hatte. Die Ausbeute betrug 9,7 %. Es wurde eine Raum-Zeit-Ausbeute von 16 g PTHF 2100/1 Katalysator*h erzielt.

**Patentansprüche**

1. Verfahren zur Herstellung von Polytetrahydrofuran oder Polytetrahydrofuranmonoestern von $C_1$- bis $C_{10}$-Monocarbonsäuren durch die Polymerisation von Tetrahydrofuran an einem heterogenen Katalysator in Gegenwart eines der Telogene Wasser, 1,4-Butandiol, Polytetrahydrofuran eines Molekulargewichts von 200 bis 700 Dalton, einer $C_1$- bis $C_{20}$-Monocarbonsäure oder Gemischen dieser Telogene, dadurch gekennzeichnet, daß man als Katalysator einen Trägerkatalysator verwendet, der eine katalytisch aktive Menge einer sauerstoffhaltigen Wolfram- oder Molybdänverbindung oder Gemische dieser Verbindungen auf einem oxidischen Trägermaterial enthält und der nach Aufbringung der Vorläuferverbindungen der sauerstoffhaltigen Molybdän- und/oder Wolframverbindungen auf den Trägermaterial-Vorläufer bei Temperaturen von 500 bis 1000°C calciniert worden ist.

2. Verfahren nach Anspruch 1, dadurch gekennzeichnet, daß man als oxidisches Trägermaterial Zirkoniumdioxid, Titandioxid, Hafniumoxid, Yttriumoxid, Eisenoxid, Aluminiumoxid, Zinnoxid, Siliziumdioxid, Zinkoxid oder Gemische dieser Oxide verwendet.

3. Verfahren nach den Ansprüchen 1 und 2, dadurch gekennzeichnet, daß man einen Katalysator verwendet, der zusätzlich mit sauerstoffhaltigen Schwefel- und/oder Phosphor-Verbindungen dotiert ist.

4. Verfahren nach den Ansprüchen 1 bis 3, dadurch gekennzeichnet, daß der Trägerkatalysator 0,1 bis 50 Gew.-% Molybdän und/oder Wolfram, berechnet als Molybdäntrioxid beziehungsweise Wolframtrioxid und bezogen auf das Gesamtgewicht des Katalysators, enthält.

5. Verfahren nach den Ansprüchen 1 bis 4, dadurch gekennzeichnet, daß man einen Trägerkatalysator verwendet, der 0,05 bis 10 Gew.-% Schwefel und/oder Phosphor, berechnet als Sulfat beziehungsweise Phosphat und bezogen auf das Gesamtgewicht des Katalysators, enthält.

6. Verfahren nach den Ansprüchen 1 bis 5, dadurch gekennzeichnet, daß man Zirkoniumdioxid als Trägermaterial verwendet.

7. Verfahren nach den Ansprüchen 1 bis 5, dadurch gekennzeichnet, daß man Titandioxid oder Gemische des Titandioxids mit Zirkoniumdioxid als Trägermaterial verwendet.

8. Verfahren nach den Ansprüchen 1 bis 7, dadurch gekennzeichnet, daß man als Telogen Wasser, 1,4-Butandiol, 1,4-Butandiol/Wasser-Gemische, Ameisensäure oder Essigsäure verwendet.

9. Verfahren nach den Ansprüchen 1 bis 8, dadurch gekennzeichnet, daß man Tetrahydrofuran mit einem Telogengehalt von 0,04 bis 17 mol-%, bezogen auf Tetrahydrofuran, in die Polymerisation einsetzt.

10. Verfahren nach den Ansprüchen 1 bis 9, dadurch gekennzeichnet, daß man Trägerkatalysatoren verwendet, die durch Imprägnierung der frisch gefällten und getrockneten Hydroxide des Zirkoniums, Titans, Hafniums, Yttriums, Eisens, Aluminiums, Zinns oder Zinks oder frisch gefällter und getrockneter Kieselsäure oder Gemische dieser Verbindungen mit einer Lösung der Vorläuferverbindungen der katalytisch aktiven Molybdän- und/oder Wolframverbindungen und gegebenenfalls mit Sulfat- und/oder phosphathaltigen Lösungen, anschließende Trocknung und Calcinierung bei 500 bis 1000°C hergestellt worden sind.

## Claims

1. A process for the preparation of polytetrahydrofuran or polytetrahydrofuran monoesters of $C_1$-$C_{10}$ monocarboxylic acids by the polymerization of tetrahydrofuran over a heterogeneous catalyst in the presence of one of the telogens water, 1,4-butanediol, polytetrahydrofuran having a molecular weight of from 200 to 700 dalton, a $C_1$-$C_{20}$ monocarboxylic acid or mixtures of these telogens, wherein the catalyst used is a supported catalyst which contains a catalytically active amount of an oxygen-containing tungsten or molybdenum compound or mixtures of these compounds on an oxidic support material and which has been calcined at from 500 to 1000°C following the application of the precursor compounds of the oxygen-containing molybdenum and/or tungsten compounds to the support material precursor.

2. A process as claimed in claim 1, wherein the oxidic support material used is zirconium dioxide, titanium dioxide, hafnium oxide, yttrium oxide, iron oxide, aluminum oxide, tin oxide, silicon dioxide, zinc oxide or mixtures of these oxides.

3. A process as claimed in claims 1 and 2, wherein a catalyst is used which is additionally doped with oxygen-containing sulfur and/or phosphorus compounds.

4. A process as claimed in any of claims 1 to 3, wherein the supported catalyst contains from 0.1 to 50% by weight of molybdenum and/or tungsten, calculated as molybdenum trioxide or tungsten trioxide and based on the total weight of the catalyst.

5. A process as claimed in any of claims 1 to 4, wherein a supported catalyst is used which contains from 0.05 to 10% by weight of sulfur and/or phosphorus, calculated as sulfate or phosphate and based on the total weight of the catalyst.

6. A process as claimed in any of claims 1 to 5, wherein zirconium dioxide is used as support material.

7. A process as claimed in any of claims 1 to 5, wherein titanium dioxide or mixtures of titanium dioxide with zirconium dioxide are used as support material.

8. A process as claimed in any of claims 1 to 7, wherein water, 1,4-butanediol, 1,4-butanediol/water mixtures, formic acid or acetic acid is used as telogen.

9. A process as claimed in any of claims 1 to 8, wherein tetrahydrofuran having a telogen content of from 0.04 to 17 mol%, based on tetrahydrofuran, is used for the polymerization.

10. A process as claimed in any of claims 1 to 9, wherein supported catalysts are used which have been prepared by impregnation of the freshly precipitated and dried hydroxides of zirconium, titanium, hafnium, yttrium, iron, aluminum, tin or zinc or freshly precipitated and dried silicic acid or mixtures of these compounds with a solution of the precursor compounds of the catalytically active molybdenum and/or tungsten compounds and optionally with sulfate-containing and/or phosphate-containing solutions, followed by drying and calcination at from 500 to 1000°C.

**Revendications**

1. Procédé de préparation de polytétrahydrofuranne ou de monoesters de polytétrahydrofuranne et d'acides monocarboxyliques en $C_1$ à $C_{10}$, par polymérisation de tétrahydrofuranne sur un catalyseur hétérogène en présence de l'un des télogènes que sont l'eau, le 1,4-butanediol, le polytétrahydrofuranne ayant une masse moléculaire de 200 à 700 daltons, un acide monocarboxylique en $C_1$ à $C_{10}$ ou des mélanges de ces télogènes, caractérisé en ce qu'on utilise en tant que catalyseur un catalyseur supporté, qui contient une quantité catalytiquement active d'un composé oxygéné du tungstène ou du molybdène ou des mélanges de ces composés sur un matériau support de type oxyde, et qui, après application des composés précurseurs des composés oxygénés du molybdène et/ou du tungstène sur le précurseur du matériau support, a été calciné à des températures de 500 à 1000°C.

2. Procédé selon la revendication 1, caractérisé en ce qu'on utilise en tant que matériau support de type oxyde le dioxyde de zirconium, le dioxyde de titane, l'oxyde de hafnium, l'oxyde d'yttrium, l'oxyde de fer, l'oxyde d'aluminium, l'oxyde d'étain, le dioxyde de silicium, l'oxyde de zinc ou des mélanges de ces oxydes.

3. Procédé selon les revendications 1 et 2, caractérisé en ce qu'on utilise un catalyseur qui en outre a été dopé par des composés oxygénés du soufre et/ou du phosphore.

4. Procédé selon l'une quelconque des revendications 1 à 3, caractérisé en ce que le catalyseur supporté contient de 0,1 à 50 % en poids de molybdène et/ou de tungstène, cette quantité étant calculée respectivement en tant que trioxyde de molybdène et trioxyde de tungstène et étant rapportée au poids total du catalyseur.

5. Procédé selon l'une quelconque des revendications 1 à 4, caractérisé en ce qu'on utilise un catalyseur supporté qui contient de 0,05 à 10 % en poids de soufre et/ou de phosphore, cette quantité étant calculée respectivement en tant que sulfate et phosphate et étant rapportée au poids total du catalyseur.

6. Procédé selon l'une quelconque des revendications 1 à 5, caractérisé en ce qu'on utilise du dioxyde de zirconium en tant que matériau support.

7. Procédé selon l'une quelconque des revendications 1 à 5, caractérisé en ce qu'on utilise en tant que matériau support du dioxyde de titane ou des mélanges de dioxyde de titane et de dioxyde de zirconium.

8. Procédé selon l'une quelconque des revendications 1 à 7, caractérisé en ce qu'on utilise en tant que télogène l'eau, le 1,4-butanediol, les mélanges de 1,4-butanediol et d'eau, l'acide formique ou l'acide acétique.

9. Procédé selon l'une quelconque des revendications 1 à 8, caractérisé en ce qu'on l'utilise dans la polymérisation du tétrahydrofuranne ayant une teneur en télogène de 0,04 à 17 % en moles par rapport au tétrahydrofuranne.

10. Procédé selon l'une quelconque des revendications 1 à 9, caractérisé en ce qu'on utilise des catalyseurs supportés qui ont été préparés par imprégnation des hydroxydes, fraîchement précipités et séchés, du zirconium, du titane, du hafnium, de l'yttrium, du fer, de l'aluminium, de l'étain ou du zinc, ou encore de silice fraîchement précipitée et séchée, ou de mélanges de ces composés avec une solution des composés précurseurs des composés catalytiquement actifs du molybdène et/ou du tungstène, et éventuellement avec des solutions contenant un sulfate et/ou un phosphate, puis séchage et calcination à une température de 500 à 1000°C.